# EUROPEAN PATENT SPECIFICATION

(11) **EP 1 277 630 B1**
(45) Date of publication and mention of the grant of the patent: **27.02.2008**
(21) Application number: 01116273.2
(22) Date of filing: 05.07.2001
(51) Int. Cl.: B60R 21/34

(54) **Front hood device**
Motorhaubenvorrichtung
Dispositif de capot avant

(43) Date of publication of application: 22.01.2003
(73) Proprietor: Ford Global Technologies, LLC, Dearborn, MI 48126 (US)
(72) Inventor: Ericsson, Mattias, 432 54 Varberg (SE)
(74) Representative: Vink, Charlotta

(56) References cited:
- EP-A2- 1 104 726
- DE-A1- 2 922 893
- FR-A1- 2 706 961
- US-A- 3 883 167
- US-A- 3 972 390
- US-A- 4 123 948

## Description

### Field of the Invention

The present invention relates to a front hood device comprising at least two connecting elements arranged between a panel and a support in a motor vehicle, wherein said connecting elements are mutually connected by a bridge element.

### Technical Background

Collisions between pedestrians and moving motor vehicles are generally quite serious. Even at low speeds serious injury may be caused to a pedestrian involved in such a collision.

In particular the construction of front hoods for motor vehicles has been subject to development. It will be appreciated that the front hood, while absorbing the impact, has only a limited opportunity to absorb the impact in the event of a collision with a pedestrian because of the presence of the engine block beneath the front hood. If the impact is not absorbed sufficiently quickly, the pedestrian will become injured upon the engine block. On the other hand it is desirable for the manufacturer to produce stiff cars for a number of reasons.

There has heretofore been proposed in WO 00/69704 A2 a front hood assembly of a motor vehicle, wherein according to said application the front hood is hinged to the chassis of the motor vehicle via a hinge. Said hinge is plastically deformed under the impact of a collision with a pedestrian in order to absorb energy.

One issue of the known assembly is that it is difficult to control the behaviour of plastic deformation of the hood hinge. Depending on the force impact the deformation behaviour of the assembly can vary quite a lot and may result in either too stiff or too soft a structure may result in either too stiff or too soft a structure depending on the type of impact. This type of assembly is also sensitive to side impact, which may affect the intended deformation behaviour. EP 1 104 726 discloses an alternative safety-device also utilizing deformation of a deformation element, during impact, resulting in a transfer from a normal condition to a deformed condition of the safety device.

A second alternative to the above outlined assembly is presented in JP 2000006846, wherein in a hood hinge attachment with support structure and fuse pins is described. When an object hits the hood, the fuse pins are sheared, allowing the hinge to move, causing the support structure to absorb the impact force and thereby prevent the rear portion of the hood from hitting the windshield.

According to this prior art, the energy from an object hitting the hood can be absorbed in a more controlled way, although the energy absorption in that case is limited to a hinged hood. Further, this hood hinge attachment is also sensitive to side impact.

Another issue of both the above prior-art references is that it is primarily the hood itself and not surrounding sections that will absorb impact energy from an object in case of a collision. Thus, it is still an object to provide a safer front hood in case of collision with a pedestrian.

At the same time it is important to provide a device that is robust, simple and easy to manufacture and yet not overly costly.

### Summary of the Invention

The object of the present invention is to provide a front hood device that overcomes the above issues, and presents both the necessary robustness and stability to at least desired sections of the front hood of a vehicle as well as a deformation zone to absorb energy.

A further object of the present invention is to provide a front hood device that will provide a deformation zone for energy absorption when a predefined force is applied on a front hood sections. inexpensive and especially simple to manufacture and install in a vehicle.

These and other objects are achieved by a front hood device according to claim 1. Preferred embodiments of the invention are defined in the dependent claims.

According to the invention there is provided a front hood device comprising at least two connecting elements arranged between a panel and a support in a motor vehicle, wherein said connecting elements are mutually connected to each other by bridge elements, and said front hood device has at least two bridge elements that somewhere along their extensions deviate from the propagation direction of a straight line between said connecting elements, said deviation forming a predetermined deformation path of each of the bridge elements and a retaining element, connected to at least two of said bridge elements and arranged substantially across the direction of the extension of said bridge elements, said retaining element being releasable at a given level of force impact. With a device according to the invention, it is possible to obtain a front hood device for a vehicle with the necessary robustness and stability as well as a deformation zone to absorb energy in at least desired sections of the front hood. The deformation length is sufficient to brake a pedestrian's head before it hits hard components. There is also accomplished a front hood device that will provide a deformation zone for energy absorption when a predefined force is applied on a front hood section. The retaining element is designed to snap or break at a predetermined force impact, which is higher than the requirement for stability of the front hood but lower than the tolerance of a human skull in order to protect pedestrians in a collision against the front of a vehicle.

Preferably, the bridge elements are arranged at an angle relative to each other, providing side stiffness to said front hood device. By letting the bridge element form an angle a robust structure is obtained. The robustness of the device according to the invention will protect the predetermined deformation behaviour of the device from being damaged during e.g. side impacts etc.

In accordance with a preferred embodiment of the invention, the side stiffness of said front hood device is substantially greater than the force impact level value for the retaining element. This robustness against impact and especially side impact is obtained by letting a bridge element form a framework. In accordance with a second preferred embodiment a bridge element forms a sidewall.

Suitably the front hood device has three bridge elements connected to a connecting element, in their respective ends, said bridge elements being substantially perpendicular to each other at least close to their ends. By three bridge elements said front hood device will be given the necessary stability and yet be easy to manufacture and handle.

In a further embodiment of the invention the front hood device has four bridge elements connected to a connecting element, in their respective ends, said bridge elements being substantially perpendicular to each other at least close to their ends. This further embodiment of the invention provides a robust front hood device, which can easily be mounted in a vehicle at a desired location. The front hood device according to the present embodiment can be given a symmetrical design with preferably, but not necessarily, two pairs of mutually arranged bridge elements.

Further, the front hood device preferably has bridge elements provided with at least one deviation, formed to cause the bridge elements to deform controllably outwards, in order to absorb energy, when said front hood device is subject to impact of a substantially vertical force. The deformation length is suitably substantially equal to the distance between the connecting elements of the front hood device before the deformation begins, meaning that the resulting device after energy absorption will be substantially flat. The design of the bridge element according to this embodiment of the invention will guide said front hood device to deform in a controllable manner.

In an alternative embodiment of the invention said front hood device has bridge elements provided with at least one deviation, formed to cause at least two bridge elements to deform controllably inwards, in order to absorb energy, when said front hood device is subject to impact of a substantially vertical force. This embodiment of the invention is e.g. suitable for locations where it is not desirable that the bridge elements expand sideways outwards during deformation.

Finally, there are different ways of arranging the bridge element within the scope of protection. The deviation of the bridge element can also be realised in a number of ways e.g. as a bent side wall. Alternatively the deviation of the bridge element can be realised as a bracket and preferably provided with a notch at the edge of said bracket. Further embodiments of the present invention can include a bridge element formed as a folded side wall. Hence, according to the invention a fender supporting front hood device for pedestrian protection is accomplished.

### Brief Description of the Drawings

A currently preferred embodiment of the present invention will now be described in more detail, with reference to the accompanying drawings.

Fig. 1 is a perspective view of an example of a vehicle appropriate for a front hood device according to an embodiment of the invention.

Fig. 2 is a perspective view of a first embodiment of a front hood device according to the present invention.

Fig. 3 shows a course of events for an embodiment of the present invention when subject to a vertically applied force.

Fig. 4 is a schematic plot of force versus time according to the inventive idea.

Fig. 5 is a perspective view of a second embodiment of a front hood device according to the present invention.

Fig. 6a is a perspective view of a third embodiment of a front hood device according to the present invention.

Fig. 6b is a side view of a third embodiment of a front hood device according to the present invention.

Fig. 7a is a perspective view of a fourth embodiment of a front hood device according to the present invention.

Fig. 7b is a side view of a fourth embodiment of a front hood device according to the present invention.

Fig. 8a is a perspective view of a fifth embodiment of a front hood device according to the present invention.

Fig. 8b is a side view of a fifth embodiment of a front hood device according to the present invention.

Fig. 9a is a perspective view of a sixth embodiment of a front hood device according to the present invention.

Fig. 9b is a side view of a sixth embodiment of a front hood device according to the present invention.

Fig. 10 is a sectional view of front hood device supporting a fender.

### Detailed Description of Preferred Embodiments

A first embodiment of the invention related to a front hood device for a vehicle will be described in more detail in the following with reference to the accompanying drawings.

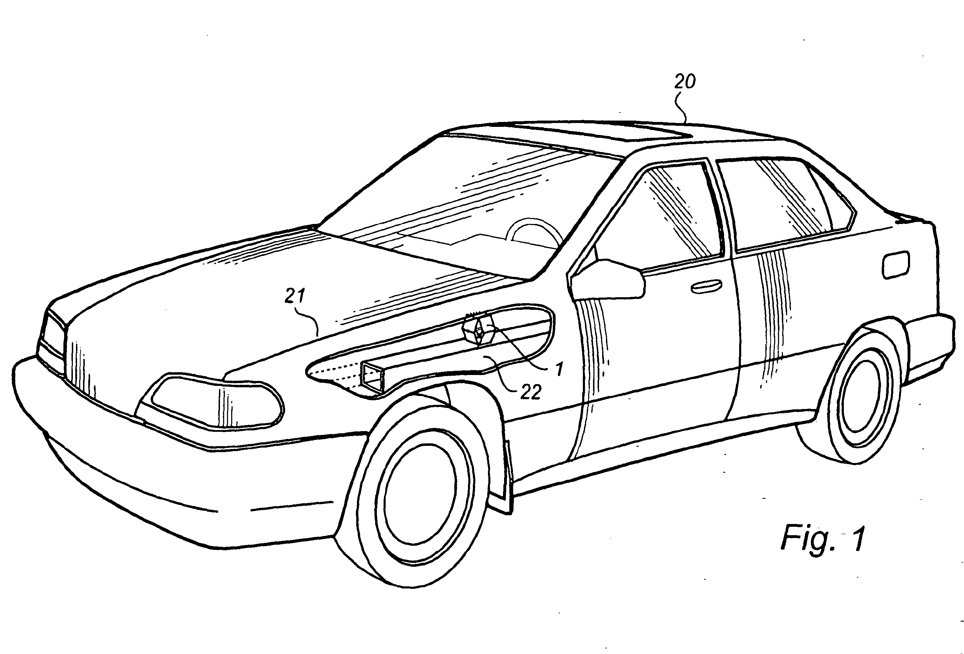

Referring now to Fig. 1, a front hood device 1 located within a vehicle 20 is shown. The front hood device 1 is arranged between an upper support 22 and a panel 21. Preferably the panel consists of e.g. a hood or a fender of the front hood of the vehicle 20.

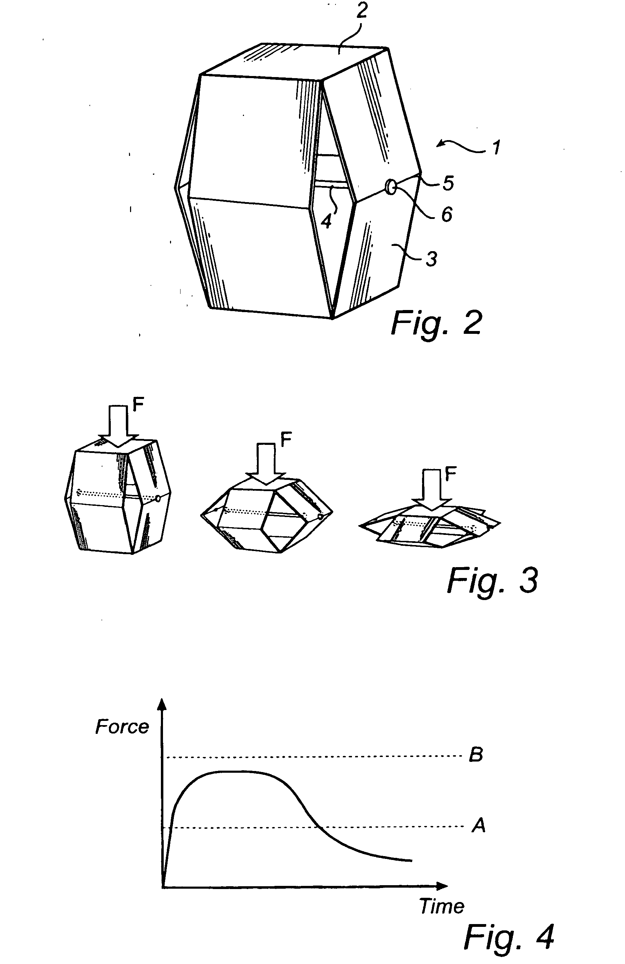

Fig. 2 shows a first embodiment of the front hood device 1 comprising connecting elements 2 mutually connected by bridge elements 3. The connecting elements 2 (although not shown here specifically) is conveniently fitted with connecting devices for attachment to adjacent structures such as panels and supports as indicated above. There exist alternative solutions, within the scope of the invention, on how to attach the connecting elements 1 to the support 22. It is appreciated that the front hood device 1 can be attached by e.g. screws, pop rivets, a weld etc. to the support 22. If desirable the front hood device 1 can also be attached to the panel 21 in the other connecting element 2 in a similar manner. By fitting the front hood device 1 between a support 22 and a panel 21 and attaching the front hood device 1 in at least said support 22, necessary vertical support for stability reasons is provided to the panel 21 resting on said front hood device 1. The front hood device 1 comprises four bracket-shaped bridge elements 3. The edge 5 of the bracket-shaped bridge element 3 is indicated by numeral 5. By a bracket-shaped element it is to be understood in the present application an element forming an elbow or rather an obtuse angle at a location along the extension of said element between the connecting elements 2. Preferably, the edge 5 of the formed obtuse angle of the element is arranged near the centre of the element taken from the connecting elements 2. Substantially perpendicular to the intended deformation direction, which will be described later, is a retaining element 4 fitted and attached between two of the bridge elements 3 at an attachment location 6 adjacent said edge 5.

Fig. 3 shows a course of events for an embodiment of the front hood device 1 when subject to a vertically applied force F. The retaining element 4 is designed to come off at one of its attachments 6 when the front hood device 1 is exposed to a force impact exceeding a predetermined force impact. According to preferred embodiment of the invention the retaining element may come off by pulling a head of the retaining element 4 through the bridge element 3 at a predetermined load. In an alternative embodiment the head of the retaining element 4 breaks off at a given force. In a second alternative embodiment of the present invention the retaining element 4 breaks off at a given load impact.

As can be seen in the above given embodiments it is considered preferred, although other possibilities are not excluded within the scope of the invention, to use a pulling force to actuate the retaining element. The front hood device 1 is then being deformed offering some resistance in order to absorb impact energy from the applied force F. In this first embodiment of the invention the bridge elements 3 are being deformed outwards.

In Fig. 4 a schematic plot of force versus time illustrates a desired behaviour of the front hood device 1 when exposed to a vertical load. Line A in the plot indicates a first level of ordinary requirements for stiffness and stability of a front hood of a vehicle. Up to this first level, the retaining device 4 and the stiffness of the front hood device 1 are sufficient to withstand any load impact on the panel of the vehicle. The second level B indicates a level where there is a serious risk of head injuries. One of the advantages of the front hood device 1 according to the invention is that the retaining device can be adapted to a different level if research results or requirements in the future indicate that a certain level is preferred. The retaining device and also the stiffness of the front hood device 1 in the deformation direction are conveniently adaptable with good accuracy for a certain level. Hence the deformation behaviour of the front hood device 1 according to the invention is controllable and the behaviour during deformation is schematically sketched in the plot.

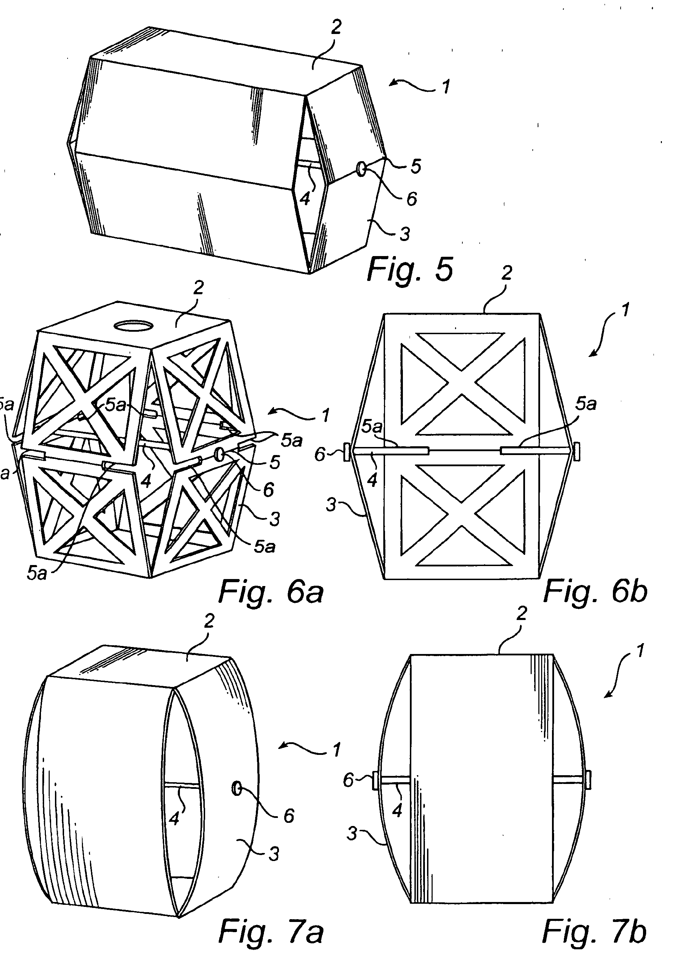

In Figs 5a and b, a second embodiment of the invention is shown. The second embodiment has an elongated shape compared to the first embodiment of the invention. The corresponding features of the second embodiment that can be found in the first embodiment are given the same numerals and will not be described again. It is possible to cover a larger area or a differently shaped panel area with the second embodiment of the invention due to the fact that the connecting elements 2 have a different area.

Figs 6a and b disclose a third embodiment according to the present invention. In this third embodiment of the front hood device 1, the bridge element 3 is built up from a framework structure. Again the bridge elements 3 are formed substantially as a bracket with the edge 5 directed outwards in the middle of the front hood device 1. The corresponding features of the third embodiment that are to be found in the first embodiment are given the same numerals and will not be described again.

A fourth embodiment of the front hood device 1 according to the invention is shown in Figs 7a and 7b. In this embodiment of the invention the bridge elements 3 are bent in order to trigger the deformation of the bridge elements 3 in a desired direction. The corresponding features of the fourth embodiment that are to be found in the first embodiment are given the same numerals and will not be described again.

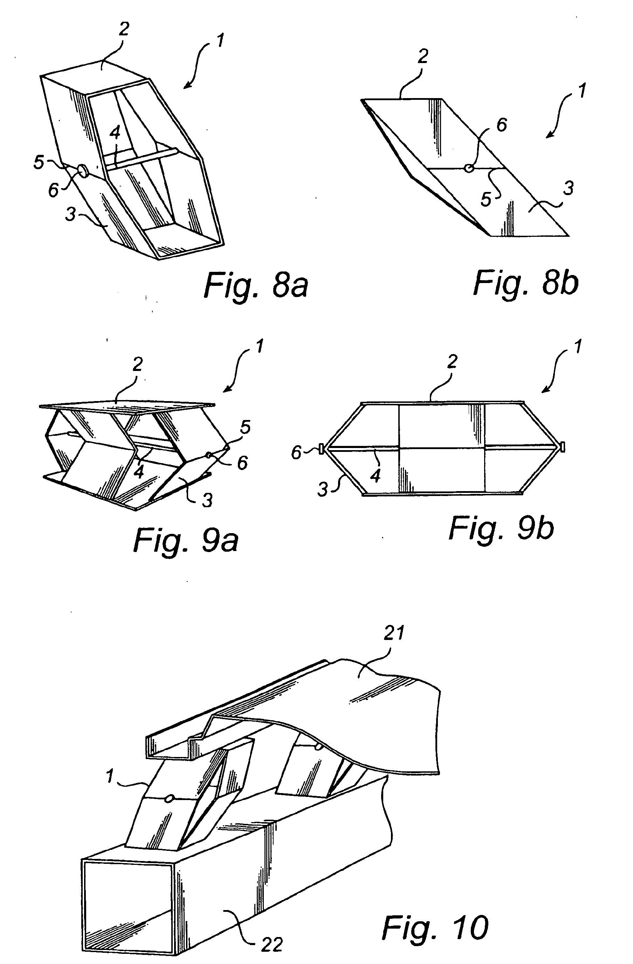

In Figs 8a and 8b a fifth embodiment of the present invention is shown. Compared to the previous embodiments the present embodiment is inclined along the deformation length. In many vehicles the support and the fender are shifted in relation to each other and hence there is a need for a front hood device 1 with the possibility of being inserted with shifted connecting elements. Further, the fifth embodiment of the front hood device 1 comprises three bridge elements 3. Two of the bridge elements 3 are connected with a retaining device 4 and the third bridge element provides additional stiffness, especially sideways, to the front hood device 1. As in the third embodiment, less material is used in this fifth embodiment.

Finally, in Figs 9a and 9b a sixth embodiment of the front hood device 1 according to the invention is shown. In this embodiment one pair of the bridge elements 3 are deformable inwards while the other pair of the bridge elements 3 are deformable outwards. The bridge elements 3 are also leaving the corners of the connecting elements 2 accessible. The corresponding features of the sixth embodiment that are to be found in the first embodiment are given the same numerals and will not be described again. The side stiffness of the front hood device 1 is substantially greater than the force impact level value for the retaining element 4. Between 5 and 50 and preferably around 20 times stronger side stiffness than the breaking limit of the retaining element 4 is desirable.

Fig. 10 shows an alternative embodiment of the invention, where a tilted embodiment of the front hood device 1 according to the invention is connected to a fender 21 in its upper end and to a support 22 in its lower end. It is also possible, although not preferred, to use the front hood device 1 for energy absorption of other panels than a fender such as e.g. a hood.

Although the present invention has been described in connection with particular embodiments thereof, it is to be understood that various modifications, alterations and adaptations may be made by those skilled in the art without departing from the spirit and scope of the invention.

Thus, there exist alternative solutions and designs for making the retaining device come off, break or snap. It is also appreciated that the above-described front hood device 1 is not limited to a specific force level. It is also understood that the front hood device 1 can be fitted between a panel and a support in a number of ways. Preferably, the front hood device 1 is fitted fixedly to a support 22 providing support for a fender 21 resting on the topside of a connecting element 2 of said front hood device 1.

## Claims

1. A front hood device (1) comprising at least two connecting elements (2) arranged between a panel (21) and a support (22) in a motor vehicle (20), wherein said connecting elements (2) are mutually connected to each other by bridge elements, and said front hood device (1) has at least two bridge elements (3) that somewhere along their extensions deviate from the propagation direction of a straight line between said connecting elements (2), said deviation (5) forming a predetermined deformation path of each of the bridge elements (3), **characterised in that** two of said at least two bridge elements (3) form oppositely arranged side walls having
a retaining element (4) connecting said two oppositely arranged side walls and being arranged substantially across the direction of the extension of said bridge elements (3), said retaining element (4) being releasable at a given level of force impact, said deviations being formed to cause said side walls to deform controllably outwards, in order to absorb energy, when said front hood device (1) is subject to impact of a substantially vertical force.

2. A front hood device (1) according to claim 1, wherein a third bridge elements (3) is arranged at an angle relative to said two side walls, providing side stiffness to the front hood device (1).

3. A front hood device (1) according to claim 2, wherein the side stiffness of said front hood device (1) is substantially greater than the force impact level value for the retaining element (4).

4. A front hood device (1) according to any one of the preceding claims, wherein the bridge element (3) forms a framework

5. A front hood device (1) according to any one of the preceding claims, wherein said front hood device (1) has three bridge elements (3) connected to a connecting element (2), in their respective ends, said bridge elements (3) being substantially perpendicular to each other at least close to their ends.

6. A front hood device (1) according to any one of the preceding claims 1-4, wherein said front hood device (1) has four bridge elements (3) connected to a connecting element (2), in their respective ends, said bridge elements (3) being substantially perpendicular to each other at least close to their ends.

7. A front hood device (1) according to any one of the preceding claims, wherein said front hood device (1) further having bridge elements (3) provided with at least one deviation (5), formed to cause at least two bridge elements (3) to deform controllably inwards, in order to absorb energy, when said front hood device (1) is subject to impact of a substantially vertical force.

8. A front hood device (1) according to any one of the preceding claims, wherein said deviation (5) of the bridge element (3) comprises a bent side wall.

9. A front hood device (1) according to any one of the preceding claims, wherein said deviation (5) of the bridge element (3) comprises a flat side wall provided with a notch (5).

10. A front hood device (1) according to any one of the preceding claims, wherein said deviation (5) of the bridge element (3) comprises a folded side wall (5).

11. A front hood device (1) according to any one of the preceding claims, wherein said panel (21) is a fender.

## Patentansprüche

1. Motorhaubenvorrichtung (1) mit mindestens zwei Verbindungselementen (2), die zwischen einem Blech (21) und einem Auflager (22) in einem Motorfahrzeug (20) eingerichtet ist, wobei die Verbindungselemente (2) miteinander durch Brückenelemente verbunden sind und die Motorhaubenvorrichtung (1) mindestens zwei Brückenelemente (3) aufweist, die irgendwo entlang ihrer Längsausdehnungen von der geradlinigen Verlaufsrichtung zwischen den Verbindungsrichtungen (2) abweichen, wobei die Abweichung (5) einen vorgegebenen Verformungsweg eines jeden Brückenelements (3) ausbildet, **dadurch gekennzeichnet, dass** zwei der mindestens zwei Brückenelemente (3) gegenüberliegend angeordnete Seitenwände ausbilden, welche
ein die gegenüberliegend angeordneten Seitenwände verbindendes Rückhalteelement (4) aufweisen, das im Wesentlichen quer zur Richtung der Längsausdehnung der Brückenelemente (3) angeordnet ist, wobei das Rückhalteelement (4) bei einer gegebenen Stärke eines Kraftstoßes ablösbar ist, wobei die Abweichungen ausgebildet werden, um kontrollierbar eine Verformung der Seitenwände nach außen zu verursachen, um Energie zu absorbieren, wenn die Motorhaubenvorrichtung (1) einem Stoß durch eine im Wesentlichen vertikale Kraft ausgesetzt ist.

2. Motorhaubenvorrichtung (1) nach Anspruch 1, wobei dritte Brückenelemente (3) unter einem Winkel bezüglich der zwei Seitenwände angeordnet sind, welche der Motorhaubemrorrichtung (1) die Seitensteifigkeit verleihen.

3. Motorhaubenvorrichtung (1) nach Anspruch 2, wobei die Seitensteifigkeit der Motorhaubenvorrichtung (1) wesentlich größer ist als der Wert der Kraftstoßstärke für das Rückhalteelement (4).

4. Motorhaubenvorrichtung (1) nach einem der vorhergehenden Ansprüche, wobei das Brückenelement (3) einen Rahmen ausbildet.

5. Motorhaubenvorrichtung (1) nach einem der vorhergehenden Ansprüche, wobei die Motorhaubenvorrichtung (1) drei Brückenelemente (3) aufweist, die an ihren jeweiligen Enden mit einem Verbindungselement (2) verbunden sind, wobei die Brückenelemente (3) zumindest in der Nähe ihrer Enden weitgehend senkrecht zueinander sind.

6. Motorhaubenvorrichtung (1) nach einem der vorhergehenden Ansprüche 1 - 4, wobei die Motorhaubenvorrichtung (1) vier Brückenelemente (3) aufweist, die an ihren jeweiligen Enden mit einem Verbindungselement (2) verbunden sind, wobei die Brückenelemente (3) zumindest in der Nähe ihrer Enden weitgehend senkrecht zueinander sind.

7. Motorhaubenvorrichtung (1) nach einem der vorhergehenden Ansprüche, wobei die Motorhaubenvorrichtung (1) weitere Brückenelemente (3) aufweist, die mit mindestens einer Abweichung (5) versehen sind, die ausgebildet ist, um kontrollierbar eine Verformung von mindestens zwei Brückenelementen (3) nach innen zu verursachen, um Energie zu absorbieren, wenn die Motorhaubenvorrichtung (1) einem Stoß durch eine im Wesentlichen vertikale Kraft ausgesetzt ist.

8. Motorhaubenvorrichtung (1) nach einem der vorhergehenden Ansprüche, wobei die Abweichung (5) des Brückenelements (3) eine gebogene Seitenwand umfasst.

9. Motorhaubenvorrichtung (1) nach einem der vorhergehenden Ansprüche, wobei die Abweichung (5) des Brückenelements (3) eine flache Seitenwand umfasst, die mit einer Aussparung (5) versehen ist.

10. Motorhaubenvorrichtung (1) nach einem der vorhergehenden Ansprüche, wobei die Abweichung (5) des Brückenelements (3) eine gefaltete Seitenwand (5) umfasst.

11. Motorhaubenvorrichtung (1) nach einem der vorhergehenden Ansprüche, wobei das Blech (21) ein Kotflügel ist.

## Revendications

1. Dispositif de capot avant (1) comprenant au moins deux éléments de liaison (2) agencés entre un panneau (21) et un support (22) dans un véhicule à moteur (20), dans lequel lesdits éléments de liaison (2) sont mutuellement reliés entre eux par des éléments de pont, et ledit dispositif de capot avant (1) a au moins deux éléments de pont (3) qui, quelque part le long de leurs extensions, dévient de la direction de propagation d'une ligne droite entre lesdits éléments de liaison (2), ladite déviation (5) formant un chemin de déformation prédéterminé de chacun des éléments de pont (3), **caractérisé en ce que** deux desdits au moins deux éléments de pont (3) forment des parois latérales agencées de manière opposée ayant
un élément de retenue (4) reliant lesdites deux parois latérales agencées de manière opposée et étant agencé essentiellement à travers la direction de l'extension desdits éléments de pont (3), ledit élément de retenue (4) étant libérable à un niveau donné d'impact de force, lesdites déviations étant formées pour amener lesdites parois latérales à se déformer de manière commandée vers l'extérieur, pour absorber de l'énergie, lorsque ledit dispositif de capot avant (1) est soumis à un impact d'une force essentiellement verticale.

2. Dispositif de capot avant (1) selon la revendication 1, dans lequel un troisième élément de pont (3) est agencé à un angle par rapport auxdites deux parois latérales, fournissant une raideur latérale au dispositif de capot avant (1).

3. Dispositif de capot avant (1) selon la revendication 2, dans lequel la raideur latérale dudit dispositif de capot avant (1) est essentiellement plus grande que la valeur du niveau d'impact de force pour l'élément de retenue (4).

4. Dispositif de capot avant (1) selon l'une quelconque des revendications précédentes, dans lequel l'élément de pont (3) forme une armature.

5. Dispositif de capot avant (1) selon l'une quelconque des revendications précédentes, dans lequel ledit dispositif de capot avant (1) a trois éléments de pont (3) reliés à un élément de liaison (2), dans leurs extrémités respectives, lesdits éléments de pont (3) étant essentiellement perpendiculaires les uns aux autres au moins à proximité de leurs extrémités.

6. Dispositif de capot avant (1) selon l'une quelconque des revendications 1-4 précédentes, dans lequel ledit dispositif de capot avant (1) a quatre éléments de pont (3) reliés à un élément de liaison (2), dans leurs extrémités respectives, lesdits éléments de pont (3) étant essentiellement perpendiculaires les uns aux autres au moins à proximité de leurs extrémités.

7. Dispositif de capot avant (1) selon l'un quelconque des revendications précédentes, dans lequel ledit dispositif de capot avant (1) ayant en plus des éléments de pont (3) pourvus d'au moins une déviation (5), formée pour amener au moins deux éléments de pont (3) à se déformer de manière commandée vers l'intérieur, pour absorber de l'énergie, lorsque ledit dispositif de capot avant (1) est soumis à un impact d'une force essentiellement verticale.

8. Dispositif de capot avant (1) selon l'une quelconque des revendications précédentes, dans lequel ladite déviation (5) de l'élément de pont (3) comprend une paroi latérale courbée.

9. Dispositif de capot avant (1) selon l'une quelconque des revendications précédentes, dans lequel ladite déviation (5) de l'élément de pont (3) comprend une paroi latérale plate pourvue d'une encoche (5).

10. Dispositif de capot avant (1) selon l'une quelconque des revendications précédentes, dans lequel ladite déviation (5) de l'élément de pont (3) comprend une paroi latérale repliée (5).

11. Dispositif de capot avant (1) selon l'une quelconque des revendications précédentes, dans lequel ledit panneau (21) est une aile.
